# EUROPEAN PATENT APPLICATION

(11) **EP 3 214 221 A1**
(43) Date of publication of application: **06.09.2017**
(21) Application number: 14900100.0
(22) Date of filing: 16.10.2014
(51) Int. Cl.: D06M 15/564

(54) **AQUEOUS THERMOSETTING URETHANE COMPOUND FOR COATING YARN, AND METHOD FOR PREPARING COATED YARN COATED WITH SAME**

(30) Priority: 22.08.2014 KR 20140109710
(71) Applicant: Duksung Co., Ltd., Suwon-si, Gyeonggi-do 443-390 (KR); Sambu Fine Chemical Co., Ltd., Gimhae-si, Gyeongsangnam-do 621-847 (KR)
(72) Inventor: KIM, Sung Jin, Incheon 406-734 (KR); PARK, Hee Dae, Busan 611-764 (KR)
(74) Representative: Thibon, Laurent
(86) International application number: PCT/KR2014/009716
(87) International publication number: WO 2016/027927

(57) **Abstract**

This invention relates to an aqueous thermosetting urethane compound for yarn coating and a method of manufacturing coated yarn using the same, wherein the compound for yarn coating includes an aqueous thermosetting urethane resin and has pores, and specifically includes 100 parts by weight of an aqueous thermosetting urethane resin, 1.5 to 2.5 parts by weight of a thickener, and 6 to 12 parts by weight of a processing lubricant. Particularly, this invention relates to an aqueous thermosetting urethane compound for yarn coating, having pores formed using a foam mixer or a chemical foaming agent, and to a method of manufacturing coated yarn by coating the surface of yarn with the aqueous thermosetting urethane compound.

## Description

### Technical Field

The present invention relates to an aqueous thermosetting urethane compound for yarn coating and a method of manufacturing coated yarn using the same, and more particularly to an aqueous thermosetting urethane compound for yarn coating and a method of manufacturing coated yarn using the same, wherein an aqueous thermosetting urethane compound, composed mainly of an aqueous thermosetting urethane resin, is prepared and applied in a single layer or in multiple layers on the surface of yarn, whereby the resulting coated yarn can exhibit superior physical properties and has low density.

### Background Art

Yarn, generally useful as an industrial material, has been utilized in a manner such that the surface of yarn is coated with a thermoplastic resin in order to increase the strength thereof.

Such coated yarn is typically processed by coating polyester or nylon yarn with a thermoplastic resin such as PVC, PP, or thermoplastic polyurethane (TPU) through a die using an extruder.

When a typical thermoplastic resin is used, it is difficult to adjust the applied amount thereof, and especially, such a resin is difficult to apply in a small amount, and thus only coated yarn having a thickness of 1,000 deniers or more may be prepared, and additionally may exhibit poor durability or abrasion resistance.

With the goal of solving such problems, Korean Patent No. 10-1318135 discloses a thermoplastic polyurethane compound composition for coated yarn, wherein the thermoplastic polyurethane compound composition for use in the manufacture of coated yarn includes thermoplastic polyurethane, a thickener, and an olefin-based coupling agent.

Also, Korean Patent No. 10-1341055 discloses a composition for thermoplastic polyurethane yarn and a manufacturing method thereof, wherein thermoplastic polyurethane, a thickener, and a processing lubricant are mixed, melted, kneaded, dried, and aged, thus preparing a compound, after which the compound is placed in a co-extruder, and simultaneously any one resin selected from among thermoplastic polyurethane, polyester, nylon, and acryl is placed in another co-extruder, thereby obtaining thermoplastic polyurethane yarn having a multilayer structure configured such that the inner layer thereof is formed with the resin and the outer layer thereof is formed with the thermoplastic polyurethane compound.

Although comparatively thin coated yarn may be manufactured by the above conventional techniques, it has high density and thus makes it difficult to achieve lightness, and furthermore, the manufacture of coated yarn having various colors or functionalities (metallic appearance, changes with temperature, phosphorescence, color shift, etc.) is still difficult.

### Disclosure

### Technical Problem

Accordingly, the present invention has been made keeping in mind the above problems occurring in the related art, and an object of the present invention is to provide an aqueous thermosetting urethane compound for yarn coating and a method of manufacturing coated yarn using the same, wherein an aqueous thermosetting urethane compound, composed mainly of an aqueous thermosetting urethane resin, is prepared and applied in a single layer or in multiple layers on the surface of yarn, thus obtaining coated yarn that exhibits superior physical properties and has low density.

### Technical Solution

In order to accomplish the above object, the present invention provides an aqueous thermosetting urethane compound for yarn coating, comprising an aqueous thermosetting urethane resin and having pores. In particular, the aqueous thermosetting urethane compound comprises 100 parts by weight of an aqueous thermosetting urethane resin, 1.5 to 2.5 parts by weight of a thickener, and 6 to 12 parts by weight of a processing lubricant.

In addition, the present invention provides a method of manufacturing aqueous thermosetting urethane-coated yarn, comprising: 1) mixing an aqueous thermosetting urethane resin with a thickener and a processing lubricant, thus preparing an aqueous thermosetting urethane compound having pores; and 2) coating the surface of yarn with the aqueous thermosetting urethane compound.

The aqueous thermosetting urethane compound preferably has pores formed using a foam mixer or a chemical foaming agent so that the density thereof is adjusted to 0.3 to 0.6 g/cm³.

The aqueous thermosetting urethane resin preferably comprises any one or a mixture of two or more selected from among aqueous thermosetting silicone-modified urethane, aqueous thermosetting polyurethane, and aqueous thermosetting polyacryl urethane.

The thickener preferably comprises polyacrylate, and the processing lubricant preferably includes a matting agent, a foam stabilizer, a dispersant, and a crosslinking agent. Of the processing lubricant, the matting agent is preferably used in an amount of 2.5 to 3.5 parts by weight, and preferably includes silica.

The aqueous thermosetting urethane compound for yarn coating is preferably added with 8 to 15 parts by weight of a pigment.

### Advantageous Effects

According to the present invention, an aqueous thermosetting urethane compound is composed mainly of an aqueous thermosetting urethane resin and is easy to control the viscosity thereof. Furthermore, since a coater having a typical nozzle at room temperature is used, rather than an extrusion process at a high temperature, a simple apparatus can be utilized, and high productivity can result.

Also, according to the present invention, coated yarn has superior abrasion resistance and improved mechanical properties and durability, and can exhibit high thermal formability and adhesion, compared to yarn.

Also, according to the present invention, the coated yarn includes the coating layer having pores, compared to conventional coated yarn, and thus has low density, thereby ensuring lightness and good touch and elasticity. Furthermore, when multiple-layer coated yarn is manufactured, it can be imparted with various colors or functionalities, and is thus useful in a variety of industrial materials.

### Description of Drawings

FIG. 1 schematically illustrates a manufacturing process according to an embodiment of the present invention;
FIG. 2 illustrates cross-sectional images of the coated yarn manufactured by the process of FIG. 1 (wherein (a) shows the results using a foam mixer, (b) shows the results using a chemical foaming agent, and (c) shows the results without a pore forming process);
FIG. 3 schematically illustrates a manufacturing process according to another embodiment of the present invention; and
FIG. 4 illustrates a cross-sectional image of the coated yarn manufactured by the process of FIG. 3.

### Mode for Invention

The present invention addresses coated yarn having desirable physical properties and low density, manufactured by preparing an aqueous thermosetting urethane compound composed mainly of an aqueous thermosetting urethane resin, and applying the aqueous thermosetting urethane compound in a single layer or in multiple layers on the surface of yarn.

Also, the present invention addresses coated yarn, wherein a compound having pores and a compound having relatively few pores are used together, thus ensuring flexibility while decreasing the density, and furthermore, enhancing surface strength, thereby attaining more desirable physical properties and applicability to various fields.

Hereinafter, a detailed description will be given of the present invention with reference to the appended drawings.

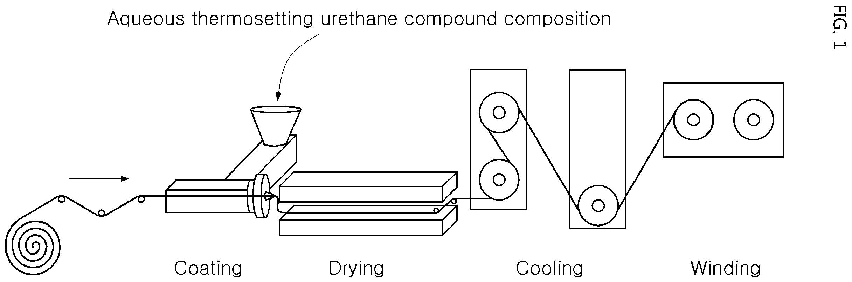

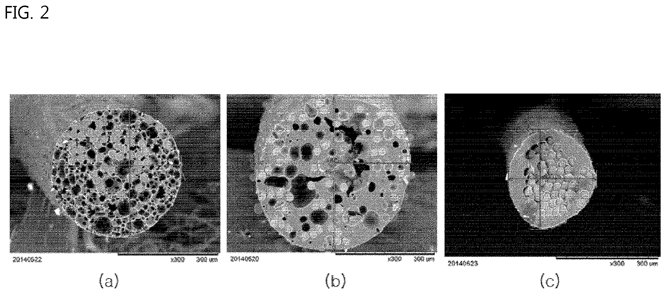

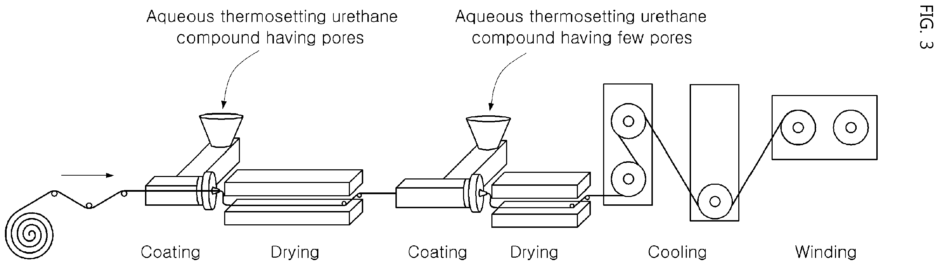

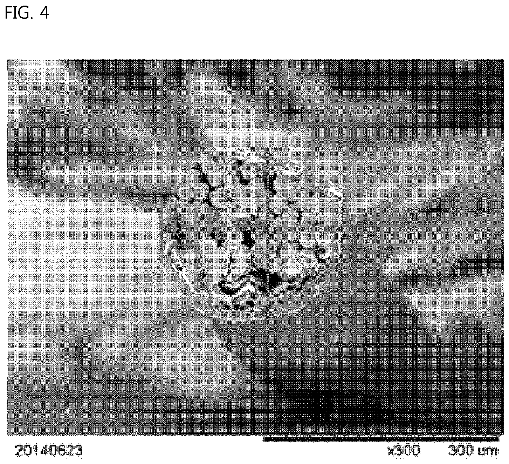

FIG. 1 schematically illustrates a manufacturing process according to an embodiment of the present invention, FIG. 2 illustrates cross-sectional images of the coated yarn manufactured by the process of FIG. 1 (wherein (a) shows the results using a foam mixer, (b) shows the results using a chemical foaming agent, and (c) shows the results without a pore forming process), FIG. 3 schematically illustrates a manufacturing process according to another embodiment of the present invention, and FIG. 4 illustrates a cross-sectional image of the coated yarn manufactured by the process of FIG. 3.

According to the present invention, the aqueous thermosetting urethane compound for use in yarn coating includes an aqueous thermosetting urethane resin and has pores. In particular, it comprises 100 parts by weight of an aqueous thermosetting urethane resin, 1.5 to 2.5 parts by weight of a thickener, and 6 to 12 parts by weight of a processing lubricant. Also, 2.5 to 3.5 parts by weight of a matting agent may be further included.

In the present invention, the aqueous thermosetting urethane compound for yarn coating is formed by mixing the aqueous thermosetting urethane resin as the main component with the thickener and the processing lubricant, and is then applied in a single layer or in multiple layers on the surface of yarn, such as polyester or nylon.

Since the aqueous thermosetting urethane resin is used in the present invention, the requirement for a specific solvent is obviated, and the desired viscosity may be easily adjusted by the addition of the thickener while maintaining the required solid content.

The aqueous thermosetting urethane resin includes any one or a mixture of two or more selected from among aqueous thermosetting silicone-modified urethane, aqueous thermosetting polyurethane, and aqueous thermosetting polyacryl urethane. The thickener is exemplified by polyacrylate, and the processing lubricant includes a matting agent, a foam stabilizer, a dispersant, and a crosslinking agent, among which the matting agent is used in an amount of 2.5 to 3.5 parts by weight, and preferably includes silica.

The thickener is used to adjust the viscosity of the aqueous thermosetting urethane compound, and is added in an amount suitable for the thickness of the coating layer applied on the yarn.

The thickener is preferably used in an amount of 1.5 to 2.5 parts by weight (PHR), based on 100 parts by weight of the aqueous thermosetting urethane resin. Within the above range, coating workability may be good. Furthermore, when the viscosity is excessively high or low, it is difficult to carry out a uniform coating process.

The processing lubricant, which is added to the aqueous thermosetting urethane resin, functions to reduce the coefficient of friction between the nozzle and the aqueous thermosetting urethane compound coating layer when the coated yarn exits via the nozzle, so that no remnants are left behind on the nozzle, thus lowering defective rates. Furthermore, the adhesion between the aqueous thermosetting urethane compound and the yarn may be enhanced, thus ensuring good coatability.

The processing lubricant is used in an amount of 6 to 12 parts by weight, based on 100 parts by weight of the aqueous thermosetting urethane resin, in order to maintain the above properties, and typically includes a matting agent, a foam stabilizer, a dispersant, and a crosslinking agent. Among them, the matting agent is used in an amount of 2.5 to 3.5 parts by weight in the present invention, and the amounts of the foam stabilizer, the dispersant, and the crosslinking agent may be appropriately controlled depending on the amount or kind of aqueous thermosetting urethane resin.

The matting agent, which is added to the aqueous thermosetting urethane resin, is preferably used in an amount of 2.5 to 3.5 parts by weight, based on 100 parts by weight of the aqueous thermosetting urethane resin.

The matting agent plays a role in matting light reflected from the surface of the coated yarn, and is exemplified by amorphous inorganic silica having an average particle size of 20 µm or less to thereby form fine roughness on the surface of the coated yarn, so that incident light is scattered or matted, whereby the surface gloss of the coated yarn is made good.

In this way, the aqueous thermosetting urethane resin as the main component is appropriately mixed with the thickener and the processing lubricant, giving the aqueous thermosetting urethane compound.

According to the present invention, the aqueous thermosetting urethane compound includes a compound having relatively few pores and a compound having pores.

The compound having few pores is a mixture of the above components, and the compound having pores is prepared by one of the following two methods.

Specifically, the compound has pores formed using a foam mixer so that the density thereof is adjusted to 0.3 to 0.6 g/cm³, or has pores formed through post foaming using a chemical foaming agent so that the density thereof is adjusted to 0.3 to 0.6 g/cm³.

The foam mixer enables rapid rotation while forming pores in the aqueous thermosetting urethane compound, and the chemical foaming agent, such as an organic or inorganic foaming agent, is added to the aqueous thermosetting urethane compound to thus generate gas by a reaction such as pyrolysis, thereby forming pores. The organic foaming agent includes ADAC (azodicarbonamide) or SH (benzene sulfonyl hydrazide), and the inorganic foaming agent includes NaHCO₃ or expandable graphite.

The aqueous thermosetting urethane compound having an appropriate density through the formation of pores using the foam mixer or the chemical foaming agent corresponds to the aqueous thermosetting urethane compound having pores according to the present invention, and the aqueous thermosetting urethane compound resulting from only mixing the components without the above processing corresponds to the aqueous thermosetting urethane compound having relatively few pores according to the present invention.

The aqueous thermosetting urethane compounds, which are prepared to possess different numbers of pores, that is, different densities, are appropriately used together and applied on the yarn, whereby the coated yarn may be variously utilized.

Specifically, the aqueous thermosetting urethane compound may be applied in a single layer or in multiple layers on the surface of the yarn. When such a compound is provided in a single layer, as shown in FIG. 1, the surface of the yarn is coated with the aqueous thermosetting urethane compound that was fed into the hopper, after which the yarn exits via the nozzle, and is dried, cooled, and wound, thereby completing the manufacture of the coated yarn.

In another embodiment of the present invention, when such a compound is provided in multiple layers, as shown in FIG. 3, the yarn is primarily coated with the aqueous thermosetting urethane compound having pores, which was fed into the hopper, exits via the nozzle, and is then dried, after which the yarn is secondarily coated with the aqueous thermosetting urethane compound having relatively few pores, exits via the nozzle, and is then dried, cooled, and wound, thereby obtaining multiple-layer coated yarn.

The aqueous thermosetting urethane compound having pores and the aqueous thermosetting urethane compound having relatively few pores are used together, thereby obtaining coated yarn configured such that the density is decreased but flexibility is ensured at the inner layer thereof, and the surface strength is enhanced at the outer layer thereof to thus exhibit superior physical properties and applicability to various fields.

Moreover, since a coater having a typical nozzle is used at room temperature, rather than extrusion at a high temperature, the apparatus is simple and productivity is increased.

Below is a description of embodiments of the present invention with reference to the appended drawings.

In an embodiment of the present invention, aqueous thermosetting silicone-modified urethane, aqueous thermosetting polyurethane, and aqueous thermosetting polyacryl urethane may be used alone or in combination to produce coated yarn, and the viscosity of the resulting composition is adjusted to a desired level using a thickener to manufacture as thin yarn as desired, and the coating thickness is variously adjusted as desired using a suitable nozzle.

In particular, aqueous thermosetting polyurethane-coated yarn having a thickness of 250 deniers or less may be manufactured.

When the aqueous thermosetting polyurethane-coated yarn having a multilayer structure is manufactured, the inner layer thereof is formed with pores through the introduction of air using a foam mixer or through post foaming using a chemical foaming agent, thus decreasing the density thereof and ensuring lightness and flexibility, after which the outer layer thereof is imparted with enhanced surface strength or various functionalities.

### Example 1

A composition used to prepare an aqueous thermosetting polyurethane compound for coated yarn, particularly a composition comprising aqueous thermosetting polyurethane, a thickener, and a processing lubricant, is specified below.

The aqueous thermosetting polyurethane is provided in the form of being dispersed in water by polymerizing polyester polyol, polyether polyol, polycarbonate polyol, or polycaprolactone with aromatic isocyanate and aliphatic isocyanate, using monomer diamine or glycol as a chain extender.

In the present invention, a thickener is used to improve productivity and matting effects upon preparation of the aqueous thermosetting polyurethane compound. The thickener is exemplified by polyacrylate. Also, in order to attain matting effects, silica powder is used. These additives may be mixed before use.

In Table 1 below, when the coated yarn is manufactured using the aqueous thermosetting polyurethane compound according to the present invention, polyacrylate is used as the thickener and silica is used as the matting agent of the processing lubricant.

**[Table 1]**

| Aqueous thermosetting polyurethane compound | Solid content (%) | Viscosity (cps, 25°C) | Md100 (100% modulus) (kgf/cm) | Coating workability | Working rate (m/min) | Surfaces tackiness | Thickener (PHR) | Matting agent (PHR) |
|---|---|---|---|---|---|---|---|---|
| A | 60 | 500-1000 | 5 | Not workable | Not workable | Strong | 0 | 0 |
| B | 30 | 200-300 | 50 | Not workable | Not workable | Fair | 0 | 0 |
| A-1 | 60 | 20,000 | 5 | Poor | 30 | Good | 1.2 | 3 |
| A-2 | 60 | 45,000 | 5 | Good | 300 | Good | 2.0 | 3 |
| B-2 | 30 | 45,000 | 50 | Good | 150 | Good | 5.0 | 3 |
| A-3 | 60 | 60,000 | 5 | Poor | 30 | Good | 3.0 | 3 |
| B-3 | 30 | 60,000 | 50 | Poor | 20 | Good | 9.5 | 3 |

As is apparent from Table 1, the viscosity of the compound was increased with an increase in the amount of the thickener. Based on the results of evaluation of coating workability, when the amount of the thickener was 2.0 PHR, the viscosity became 45,000 cps, resulting in very good workability.

When the amount of the thickener was higher than 2.0 PHR, the viscosity was excessively high, making it difficult to perform a uniform coating process. In contrast, when the amount thereof was lower than the above value, the viscosity was excessively low, making it difficult to conduct a uniform coating process.

The use of the matting agent in an amount of about 3.0 PHR resulted in good surface tackiness or gloss.

In Table 1, A and B are typically useful aqueous thermosetting polyurethane resins, and A-1,2,3 or B-2,3 are compositions according to the present invention for use in the manufacturing method of the invention.

Taking workability into consideration, the amount of water is comparatively low at high solid content, and thus the drying rate becomes favorable, ultimately increasing the working rate.

Meanwhile, the results of formation of pores in the aqueous thermosetting polyurethane compound according to the present invention through air introduction using a foam mixer and through post foaming using a chemical foaming agent, as well as the results of formation of no pores (relatively few pores), are given in Table 2 below.

**[Table 2]**

| Comparison Items | | A-2 compound for coated yarn of the invention | | | Yarn | Note |
|---|---|---|---|---|---|---|
| | | Mechanical foaming | Chemical foaming | No foaming | | |
| Yarn | | Polyester | Polyester | Polyester | Polyester | 150 deniers |
| Properties of film | Tensile strength | 47.45 | 33,85 | 85.10 | | kgf/cm² |
| | Elongation | 503.33 | 435.00 | 545.00 | | % |
| | Density | 0.6109 | 0,5054 | 1.0016 | | g/cm³ |
| Properties of coated yarn | Tensile strength | 27 | 26 | 32 | 2 | kgf/cm² |
| | Abrasion strength | 110-120 | 110-120 | 130-140 | 20-30 | Stoll (Number) |
| | Specific gravity | 1.0315 | 1.0128 | 1.1394 | 1.000 | g/cc |
| | Adhesive strength of woven mesh using coated yarn | 2.5-3.0 kgf/cm | 2.0-2.5 kgf/cm | 2.5-3.5 kgf/cm | | Reflective film adhesion |

As is apparent from Table 2, the coated yarn using the chemical foaming agent had a density decreased by about 50%, compared to the coated yarn having no pores. Furthermore, the coated yarn using the foam mixer had a density decreased by 40%, compared to the coated yarn having no pores.

Based on the results of evaluation of adhesive strength of woven mesh using the coated yarn having pores compared to when using the coated yarn having no pores, the strength was decreased slightly, but still reached a commercially acceptable level.

Based on the comprehensive results of density, hardness and adhesive strength of the coated yarn, the coated yarn using the foam mixer manifested excellent properties.

Therefore, the coated yarn according to the present invention has abrasion resistance superior to that of typical yarn (made of polyester, nylon, etc.), and may have improved mechanical properties and durability. Furthermore, it manifests excellent thermal formability and adhesion.

Table 3 below shows the components and the component ratios upon preparation of the aqueous thermosetting polyurethane compound (A-2 of Table 1) for coated yarn.

**[Table 3]**

| Composition of the invention (parts by weight) | Using foam mixer | Using chemical foaming agent | No pores |
|---|---|---|---|
| Aqueous thermosetting polyurethane resin | 90 | 90 | 90 |
| Aqueous thermosetting silicone-modified urethane resin | 10 | 10 | 10 |
| Foam stabilizer | 3 | - | - |
| Dispersant | 2 | - | - |
| Chemical foaming agent | - | 3 | - |
| Pigment | 10 | 10 | 10 |
| Thickener | 2 | 2 | 2 |
| Matting agent | 3 | 3 | 3 |
| Crosslinking agent | 3 | 3 | 3 |

As is apparent from Table 3, the density of the compound using the foam mixer could be adjusted depending on the air introduction ratio. If the density thereof is lower than 0.3, it is difficult to form pores in the coating process. In contrast, if the density is higher than 0.6, it is difficult to adjust the relative viscosity. Hence, when the ideal density is set within the range from 0.3 to 0.6 g/cm³, superior properties may result.

The yarn is coated with the aqueous thermosetting urethane compound having the above composition, thereby obtaining coated yarn.

The aqueous thermosetting polyurethane compound for coated yarn is applied on the surface of yarn (made of polyester, nylon, etc.).

As shown in FIG. 1, when single-layer coated yarn is manufactured, either the aqueous thermosetting polyurethane compound having pores or the aqueous thermosetting polyurethane compound having few pores (without a pore forming process), as in the method seen in Tables 2 and 3, is adopted, fed into the nozzle via the hopper, applied, dried, and cooled, after which the final coated yarn is wound using a typical take-off unit.

FIG. 2 illustrates the cross-sectional images of the coated yarn manufactured by the process of FIG. 1 (wherein (a) shows the results using a foam mixer, (b) shows the results using a chemical foaming agent, and (c) shows the results without a pore forming process).

In another embodiment of the present invention, as illustrated in FIG. 3, when multiple-layer coated yarn is manufactured, the aforementioned single-layer coated yarn (which is coated with either the compound having pores or the compound having few pores) is additionally coated with either the aqueous thermosetting polyurethane compound having relatively many pores or the aqueous thermosetting polyurethane compound having no pores, dried, cooled, and wound using a typical take-off unit.

FIG. 4 illustrates the cross-sectional image of the two-layer coated yarn obtained by the process of FIG. 3, wherein primary coating is performed in a manner such that a black color pigment is added using a foam mixer to adjust the density of the compound to 450 g/cm³ and then the compound is applied using a 0.28 mm nozzle and then dried, and secondary coating is conducted in a manner such that the compound having no pores and a gold pearl pigment are added, applied using a 0.3 mm nozzle, dried, and cooled, resulting in the two-layer coated yarn.

As such, a better gold outer appearance may result, compared to single coating using a mixture of gold pearl pigment and black pigment.

In the primary and the secondary coating, the first and the second compound having respective different colors may be applied, and the first or the second compound may be added with a functional pigment, as necessary, and then applied.

When the compound having pores is used in the primary coating, the compound having no pores is used in the primary coating, whereby surface abrasion strength or mechanical properties may become more desirable, based on the results of Table 2.

As described hereinbefore, the coated yarn according to the present invention includes the coating layer having pores, compared to conventional coated yarn (coated with resin such as TPU, PVC, PP, etc.), and thus has low density, thereby ensuring lightness and good touch and elasticity. Furthermore, when the multiple-layer coated yarn is manufactured, it can be imparted with various colors or functionalities, and is thus useful in a variety of industrial materials.

## Claims

1. An aqueous thermosetting urethane compound for yarn coating, comprising an aqueous thermosetting urethane resin and having pores.

2. The aqueous thermosetting urethane compound of claim 1, comprising 100 parts by weight of an aqueous thermosetting urethane resin, 1.5 to 2.5 parts by weight of a thickener, and 6 to 12 parts by weight of a processing lubricant.

3. The aqueous thermosetting urethane compound of claim 1, wherein the aqueous thermosetting urethane compound has pores formed using a foam mixer so that a density thereof is adjusted to 0.3 to 0.6 g/cm³.

4. The aqueous thermosetting urethane compound of claim 1, wherein the aqueous thermosetting urethane compound has pores formed through post foaming using a chemical foaming agent so that a density thereof is adjusted to 0.3 to 0.6 g/cm³.

5. The aqueous thermosetting urethane compound of claim 1, wherein the aqueous thermosetting urethane resin comprises any one or a mixture of two or more selected from among aqueous thermosetting silicone-modified urethane, aqueous thermosetting polyurethane, and aqueous thermosetting polyacryl urethane.

6. The aqueous thermosetting urethane compound of claim 1, wherein the thickener comprises polyacrylate.

7. The aqueous thermosetting urethane compound of claim 1, wherein the processing lubricant includes a matting agent, a foam stabilizer, a dispersant, and a crosslinking agent.

8. The aqueous thermosetting urethane compound of claim 1, wherein of the processing lubricant, the matting agent is used in an amount of 2.5 to 3.5 parts by weight.

9. The aqueous thermosetting urethane compound of claim 1, wherein the matting agent comprises silica.

10. The aqueous thermosetting urethane compound of any one of claims 1 to 9, wherein the aqueous thermosetting urethane compound is added with 8 to 15 parts by weight of a pigment.

11. A method of manufacturing aqueous thermosetting urethane-coated yarn, comprising:
1) mixing an aqueous thermosetting urethane resin with a thickener and a processing lubricant, thus preparing an aqueous thermosetting urethane compound having pores; and
2) coating a surface of yarn with the aqueous thermosetting urethane compound.

12. The method of claim 11, wherein the aqueous thermosetting urethane compound in 1) has pores formed using a foam mixer so that a density thereof is adjusted to 0.3 to 0.6 g/cm³.

13. The method of claim 11, wherein the aqueous thermosetting urethane compound in 1) has pores formed using a chemical foaming agent so that a density thereof is adjusted to 0.3 to 0.6 g/cm³.

14. The method of claim 12 or 13, wherein in 2), the aqueous thermosetting urethane compound is applied in a single layer or in multiple layers on the surface of the yarn.

15. The method of claim 14, wherein when the aqueous thermosetting urethane compound is formed in multiple layers on the surface of the yarn, the aqueous thermosetting urethane compound having pores is used together with an aqueous thermosetting urethane compound having relatively few pores.

16. The method of claim 15, wherein the aqueous thermosetting urethane compound having pores is applied on the surface of the yarn, and the aqueous thermosetting urethane compound having few pores is sequentially applied on an outer surface thereof.

17. The method of claim 11, wherein the aqueous thermosetting urethane compound in 1) comprises 100 parts by weight of the aqueous thermosetting urethane resin, 1.5 to 2.5 parts by weight of the thickener, and 6 to 12 parts by weight of the processing lubricant.

18. The method of claim 11, wherein the aqueous thermosetting urethane resin comprises any one or a mixture of two or more selected from among aqueous thermosetting silicone-modified urethane, aqueous thermosetting polyurethane, and aqueous thermosetting polyacryl urethane.

19. The method of claim 11, wherein the thickener comprises polyacrylate.

20. The method of claim 11, wherein the processing lubricant includes a matting agent, a foam stabilizer, a dispersant, and a crosslinking agent.

21. The method of claim 11, wherein of the processing lubricant, the matting agent is used in an amount of 2.5 to 3.5 parts by weight.

22. The method of claim 11, wherein the matting agent comprises silica.

23. The method of any one of claims 11 to 22, wherein the aqueous thermosetting urethane compound is added with 8 to 15 parts by weight of a pigment.
